Europäisches Patentamt

(19) European Patent Office

Office européen des brevets

(11) Publication number: **0 067 437**
**A1**

(12) # EUROPEAN PATENT APPLICATION

(21) Application number: **82105182.8**

(22) Date of filing: **14.06.82**

(51) Int. Cl.³: **G 01 N 27/56**

---

(30) Priority: **15.06.81 US 273517**

(43) Date of publication of application:
**22.12.82 Bulletin 82/51**

(84) Designated Contracting States:
**BE DE FR GB IT NL SE**

(71) Applicant: **FORD MOTOR COMPANY LIMITED**
**Eagle Way**
**Brentwood Essex CM13 3BW(GB)**

(84) Designated Contracting States:
**GB**

(71) Applicant: **FORD-WERKE AKTIENGESELLSCHAFT**
**Ottoplatz 2 Postfach 21 03 69**
**D-5000 Köln 21(DE)**

(84) Designated Contracting States:
**DE**

(71) Applicant: **FORD FRANCE SOCIETE ANONYME**
**344 Avenue Napoléon Bonaparte B.P. 307**
**F-92506 Rueil Malmaison Cedex(FR)**

(84) Designated Contracting States:
**FR**

(71) Applicant: **Ford Motor Company**

**Dearborn County of Wayne Michigan(US)**

(84) Designated Contracting States:
**BE IT NL SE**

(72) Inventor: **Colvin, Alex David**
**20840 Gardner**
**Oak Park Michigan 48237(US)**

(72) Inventor: **Butler, James William**
**7000 Plainfield**
**Dearborn Heights Michigan 48127(US)**

(74) Representative: **Drakeford, Robert William et al,**
**Ford Motor Company Limited 15/448, Research &**
**Engineering Centre Laindon**
**Basildon Essex SS15 6EE(GB)**

---

(54) **Oxygen sensor and method of operation.**

(57) A method of operating a zirconia type of oxygen sensor comprises applying an alternating current signal to the zirconia electrolyte (110), eg by means of the electrode leads (128, 130) and electrodes (124, 126) associated therewith and measuring the electrical resistance of the zirconia. The temperature of the zirconia oxide electrolyte is controlled via a heater (158), in response to changes in the electrical resistance thereby enabling the electrolyte (110) to be maintained at a steady temperature.

EP 0 067 437 A1

- 1 -

DESCRIPTION

"OXYGEN SENSOR AND METHOD OF OPERATION"

This invention relates to oxygen sensors and methods for operating such sensors.

Conventional oxygen sensors comprise a solid electroylte, eg of ziconia, one side of which is exposed to a reference gas, such as air, having a known oxygen content, and the other side of which is exposed to the gas under examination. The electrical potential developed across the electrolyte is a measure of the difference in oxygen concentrations of the reference gas and the gas under examination. Since the electrical potential also varies with changes in temperature of the electrolyte, it is necessary to control the temperature of the electrolyte. This is usually achieved by means of a heating element. Hitherto this has been achieved by means of a dc heating element operated in response to changes in the temperature of the housing within which the electrolyte is positioned, as detected by a thermocouple. With such a system, inaccuracies in the measurement of oxygen partial pressure can arise in view of the insensitivity of the heating element to changes in the temperature of the electrolyte.

According to the present invention there is provided a method of operating an oxygen sensor having an electrolyte one side of which is arranged to be exposed to a reference gas of known oxygen content and the other side of which is arranged to be exposed to a test gas, the method comprising the steps of measuring the electrical potential across the electrolyte and controlling the temperature of the electroyle to maintain the temperature substantially constant, characterised in that the temperature of the electrolyte is controlled by applying to the electrolyte an alternating current signal, deriving by the alternating current signal a control signal representing the resistance of the electrolyte and controlling the temperature of the electrolyte in response to the control signal.

The invention also includes an oxygen sensor comprising an electrolyte one side of which is arranged for exposure to a reference gas of known oxygen content and the other side of which is arranged for exposure to a test gas, means for measuring the electrical potential across the electrolyte, a heater for heating the electrolyte, control means for controlling the heater to maintain the temperature of the electrolyte substantially constant, characterised in that the control means comprises means for applying an alternating signal across the electrolyte and for deriving by the alternating current signal a control signal representing the resistance of the electrolyte, and means for controlling the heater in response to the control signal.

A preferred embodiment of the invention will now be described, by way of example only, with reference to the accompanying drawings, in which:

Figure 1 schematically illustrates a conventional oxygen sensor; and

Figure 2 schematically illustrates an oxygen sensor in accordance with the invention.

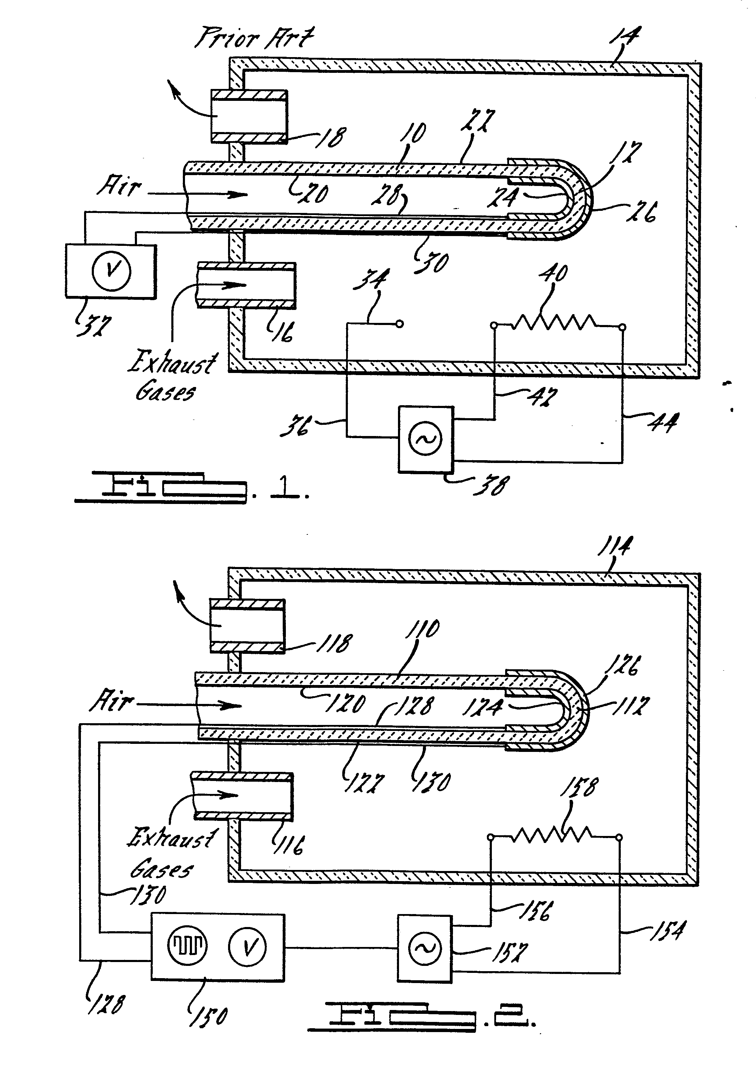

In Figure 1 there is shown schematically a zirconia oxide electrolyte 10 for an oxygen sensor. The electrolyte is in the form of a closed end tube. A closed end 12 of the zirconia oxide electrolyte 10 is confined within a closed insulated housing 14. The housing has an entrance tube 16 for permitting exhaust gases to enter the same and an exhaust tube 18 for permitting exhaust gases to be removed from the housing.

The zirconia oxide electrolyte 10 has an oxygen reference side 20 and an oxygen potential measuring side 22. As is known in the art, ambient air can be flowed into the oxygen reference side 20 of the zirconia oxide electrolyte and exhaust gases can be passed over the oxygen potential measuring side 22 of the sensor in order to develop an electrical potential across the zirconia oxide electrolyte. The electrical potential developed by having a difference in oxygen potential on the two sides of the zirconia oxide electrolyte is measured by means of thin platinum electrodes 24 and 26 placed respectively on the oxygen reference side 20 and the oxygen potential measuring side 22 of the zirconia oxide electrolyte 10. Thin electrode leads 28 and 30 respectively connect platinum electrodes 24 and 26 to a voltage measuring device 32. The voltage measuring device indicates the difference in potential between the oxygen reference side and the oxygen potential measuring side of the zirconia oxide oxygen sensor. This measurement indicates the partial pressure of oxygen in the exhaust gases in a manner well known to the skilled artisan.

The EMF developed across the zirconia oxide electrolyte 10 by a difference in oxygen potential on the two sides of the electrolyte is a function of the temperature of the zirconia oxide electrolyte. The prior art has taught the following structure for attempting to control the temperature of the zirconia oxide electrolyte. Basically, the structure taught is one wherein a thermocouple 34 is connected by means of an electrical lead 36 to an electrical controller 38. The controller in turn is connected to an electrical heating element 40 by means of electrical leads 42 and 44. The thermocouple 34 and electrical heater element 40 are located within the housing 14. The electrical controller is set in an attempt to maintain a relatively constant temperature within the environments of the housing 14. The thermocouple 34 senses the temperature within the housing and feeds that information by means of electrical lead 36 to the electrical controller 38. If the controller finds that the temperature is satisfactory, nothing happens. However, if the electrical controller finds that the temperature is too cool, it provides electrical energy by means of electrical leads 42 and 44 to the electrical heater element 40 in order to increase the temperature within the housing. When the proper temperature is reached, the thermocouple 34 feeds this information to the electrical controller 38 which in turn eliminates the application of electrical energy to the electrical heater element.

While the system of Figure 1 does give workable results, there is some inaccuracy in assuming that the temperature of the zirconia oxide electrolyte is in fact the temperature established within the housing 14. Because of the movement of gases through the housing and the time and rate of heat transfer operations, this assumption obviously is not accurate. Since the EMF generated across a given thickness of zirconia oxide electrolyte varies as a function of temperature as well as oxygen concentration, having only an approximate idea of the temperature of the zirconia oxide electrolyte means that there was some error bound to be built into obtaining oxygen pressure of the sample gas by using the aforedescribed method.

In Figure 2 there is seen a schematic drawing of an oxygen sensor in accordance with the invention. This preferred embodiment is not intended to be a limitation upon the scope of this invention, but merely is a descriptive example of the application of this invention to a system in which the zirconia oxide oxygen sensor is used to determine the partial pressure of oxygen in an exhaust gas stream.

In Figure 2 there is seen a zirconia oxide electrolyte tube 110 of a zirconia oxide oxygen sensor. This zirconia oxide electrolyte tube has a closed end 112 and is located within a closed insulated housing 114. An entrance tube 116 and an exit tube 118 are provided as a means for allowing exhaust gases to pass into and to be removed from the housing 114.

The zirconia oxide electrolyte 110 has an oxygen reference side 120 and an oxygen potential measuring side 122. As is well known by those skilled in the art, normally a gaseous material having a known oxygen content (such as air or pure oxygen) is blown against the oxygen reference side 120 of the zirconia oxide electrolyte 110. At the same time, gases containing an unknown amount of oxygen (such as those developed by burning fuel in an internal combustion engine) are applied against the oxygen potential measuring side 122 of the zirconia oxide electrolyte. Such gases are introduced into the housing 114 through the entrance tube 116 and exhausted therefrom by means of the exhuast tube 118.

Platinum electrodes 124 and 126 are respectively located on the oxygen reference side 120 and the oxygen potential measuring side 122 of the zirconia oxide electrolyte 110. These electrodes, while shown rather thick in the drawing, are in fact relatively thin, in the order of .001 cm. Normally, these electrodes are placed on their associated surfaces by the painting of a platinum material. An electrode lead 128 is connected to platinum electrode 124 while an electrode lead 130 is connected to the platinum electrode 126.

In accordance with the teachings of the method of this invention, an alternating current signal is applied to the zirconia oxide electrolyte 110 by means of the leads 128 and 130 and their associated platinum electrodes 124 and 126. The alternating current signal is applied on the electrical leads by means of a signal generating and voltage measuring device 150. In accordance with the teachings of the preferred embodiment, a one KHZ square wave signal is generated by the device 150 and applied on the leads 128 and 130. Other alternating current signals may be used if desired. The square wave pattern described has been selected for the preferred embodiment because of ease of generation and ease of synchronous detection.

Application of the square wave signal to the platinum electrodes 124 and 126 provides a means by which these same electrodes, through their associated electrical leads 128 and 130, can measure the electrical resistance of the zirconia oxide electrolyte 110. Since the thickness of the zirconia oxide electrolyte is constant between the two electrodes, a known measurement of the resistance of this material per unit area indicates the exact temperature at which the zirconia oxide material is at. The temperature and electrical resistance properties of this electrolyte are mathematically related to one another. The signal generating and voltage measuring device 150 is used to measure the voltage, which defines the electrical resistance of the zirconia oxide electrolyte. Once the resistance of the zirconia oxide electrolyte is known, the signal generating and voltage measuring device 150 feeds that information to an electrical controller 152. This electrical controller is connected by electrical leads 154 and 156 to an electric heater element 158 located within the housing 114. The electrical controller 152 determines the amount of power applied by means of electrical leads 154 and 156 to the electrical heater element in response to the measured resistance of the zirconia oxide electrolyte 110.

In this manner, the addition heat to the housing 114 is a direct function of the measured electrical resistance of the zirconia oxide electrolyte 110 and thus a direct function of the temperature of that electrolyte. If the electrolyte is at the required operating temperature, no additional electrical input is made to the electric heater element 158. If, however, the temperature of the zirconia oxide electrolyte drops, the necessary heat is added to the housing to bring the electrolyte to its proper temperature. In this manner also there is a direct correlation between the amount of heat added to the housing and the temperature of the zirconia oxide electrolyte. There is no loss incurred by measuring temperature at a position remote from the zirconia oxide electrolyte and relying on that system for temperature control.

## CLAIMS

1. A method of operating an oxygen sensor having an electrolyte (110) one side (120) of which is arranged to be exposed to a reference gas of known oxygen content and the other side (122) of which is arranged to be exposed to a test gas, the method comprising the steps of measuring the electrical potential across the electrolyte, and controlling the temperature of the electrolyte to maintain the temperature substantially constant, characterised in that the temperature of the electrolyte is controlled by applying to the electrolyte an alternating current signal, deriving by the alternating current signal a control signal representing the resistance of the electrolyte and controlling the temperature of the electrolyte in response to the control signal.

2. A method according to Claim 1 wherein the alternating current signal is a square-wave signal.

3. A method according to Claim 1 or Claim 2 wherein the square wave signal has a frequency of 1 kHz.

4. An oxygen sensor comprising an electrolyte (110) one side (120) of which is arranged for exposure to a reference gas of known oxygen content and the other side (122) of which is arranged for exposure to a test gas, means (124, 126, 128, 130, 150) for measuring the electrical potential across the electrolyte, a heater (158) for heating the electrolyte, control means (150, 152) for controlling the heater to maintain the temperature of the electrolyte substantially constant characterised in that the control means comprises means (150) for applying an alternating current signal across the electrolyte and for deriving by the alternating current signal a control signal representing the resistance of the electrolyte, and means (152) for controlling the heater (158) in response to the control signal.

5. An oxygen sensor according to Claim 4 wherein the electrolyte (110) comprises zirconia.

6. An oxygen sensor according to Claim 4 or Claim 5 wherein the means for measuring the electrical potential across the electrolyte and for applying the alternating current signal thereacross comprises electrodes (24, 26) deposited on opposite sides (120, 122) of the electrolyte.

7. An oxygen sensor according to any one of claims 4 to 6 wherein the means for applying the alternating current signal acorss the electrolyte (110) comprises a square-wave generator (150).

Prior Art

FIG. 1.

FIG. 2.

**European Patent Office**

**EUROPEAN SEARCH REPORT**

Application number

EP 82 10 5182.8

| Category | Citation of document with indication, where appropriate, of relevant passages | Relevant to claim | CLASSIFICATION OF THE APPLICATION (Int. Cl. ³) |
|---|---|---|---|
| | **DOCUMENTS CONSIDERED TO BE RELEVANT** | | |
| Y | EP - A2 - 0 030 164 (NGK INSULATORS, LTD.) <br> * claims 1 to 9; page 4, lines 11 to 26; page 14, lines 15 to 20; page 17, lines 19 to 23 * <br> -- | 1,3-6 | G 01 N 27/56 |
| Y | US - A - 3 616 274 (D.S. EDDY) <br> * claims 1 to 5; column 2, lines 1 to 9, 24 to 65 * <br> -- | 1,4-6 | |
| Y | US - A - 4 005 001 (A.R. PEBLER) <br> * column 2, lines 25 to 34; column 3, lines 10 to 19; column 5, lines 17 to 48; fig. 1, 7 * <br> -- | 1,4-7 | **TECHNICAL FIELDS SEARCHED (Int.Cl. ³)** <br><br> G 01 N 27/00 |
| Y,P | GB - A - 2 069 709 (ORION RESEARCH) <br> * claims 1 to 19; page 2, lines 20, 21; page 3, lines 18, 19 * <br> -- | 1,3,4 | |
| Y | FR - A1 - 2 385 102 (J. TACUSSEL) <br> * page 2, lines 11, 12; page 10, lines 10 to 19 * <br> -- | 1-3 | **CATEGORY OF CITED DOCUMENTS** |
| Y | US - A - 4 135 381 (W.M. SHERWIN) <br> * column 2, lines 20 to 24; column 3, lines 58 to 61 * <br> ---- | 1-3,7 | X: particularly relevant if taken alone <br> Y: particularly relevant if combined with another document of the same category <br> A: technological background <br> O: non-written disclosure <br> P: intermediate document <br> T: theory or principle underlying the invention <br> E: earlier patent document, but published on, or after the filing date <br> D: document cited in the application <br> L: document cited for other reasons <br><br> &: member of the same patent family, corresponding document |

The present search report has been drawn up for all claims

| Place of search | Date of completion of the search | Examiner |
|---|---|---|
| Berlin | 10-09-1982 | DIETRICH |

EPO Form 1503.1 06.78